# EUROPÄISCHE PATENTSCHRIFT

(11) **EP 1 640 297 B1**
(45) Veröffentlichungstag und Bekanntmachung des Hinweises auf die Patenterteilung: **28.05.2008**
(21) Anmeldenummer: 05020883.4
(22) Anmeldetag: 26.09.2005
(51) Int. Cl.: B65G 69/28

(54) **Ladebrückenauflager mit Sensor**
Loading bridge support with sensor
Support pour rampe de quai avec capteur

(30) Priorität: 27.09.2004 DE 102004047226
(43) Veröffentlichungstag der Anmeldung: 29.03.2006
(73) Patentinhaber: ALTEN GERÄTEBAU GMBH, D-30974 Wennigsen (DE)
(72) Erfinder: Hofmann, Gerhard, 31832 Springe (DE); Turbanisch, Reiner, 31535 Neustadt (DE)
(74) Vertreter: Eisenführ, Speiser & Partner

(56) Entgegenhaltungen:
- DE-A1- 3 402 576
- DE-A1- 3 412 068
- DE-C1- 3 324 131

## Beschreibung

Die Erfindung betrifft eine Ladebrücke zur Überbrückung der Distanz zwischen einem Transportfahrzeug und einer Laderampe zum Zwecke des Transports von Waren über die Ladebrücke nach dem Oberbegriff des Anspruchs 1. Ein weiterer Aspekt der Erfindung ist eine Sensorstrebe zur Befestigung an einer Ladebrücke nach dem Oberbegriff des Anspruchs 21. Schließlich betrifft die Erfindung ein Verfahren zur Überwachung des Auflagezustandes einer Ladebrücke auf einer Ladefläche eines Transportfahrzeugs oder einer Verkehrsfläche einer Laderampe nach dem Oberbegriff des Anspruchs 22.

Noch ein weiterer Aspekt der Erfindung ist ein Vorschub zur Befestigung am Plateau einer Ladebrücke nach dem Oberbegriff des Anspruchs 20. Ladebrücken der vorgenannten Art sind bekannt und werden beispielsweise verwendet, um den Spalt, der sich zwischen einem rückwärts an eine Laderampe herangefahrenen Lastkraftwagen und der Laderampe befindet, zu überbrücken, und so das Be- und Entladen des Lastkraftwagens mit Waren zu ermöglichen. Es ist dabei bekannt, die Ladebrücke beweglich an der Laderampe zu befestigen und zunächst, während der Anfahrt des Lastkraftwagens in einem Ruhezustand zu belassen. Sobald der Lastkraftwagen vor der Laderampe zum Stillstand gekommen ist, kann die Ladebrücke durch Abklappen und/oder Ausfahren von beweglich an der Ladebrücke befestigten Vorschüben in eine Betriebsposition gebracht werden, in der die Ladebrücke einerseits den Spalt zum Lastkraftwagen überbrückt und andererseits einen Höhenunterschied zwischen der Ladefläche des Lastkraftwagens und der Verkehrsfläche der Laderampe ausgleicht.

Eine wichtige Anforderung an solche Ladebrücken ist die Herstellung einer sicheren Auflage des freien Endes der Ladebrücke, da regelmäßig hohe Lasten über die Ladebrücke bewegt werden müssen und die Auflage des freien Endes hierbei eine wichtige abstützende Funktion für die Tragfähigkeit der Ladebrücke übernimmt.

Ein Problem bei solchen Ladebrücken besteht darin, dass die relative Höhe der Ladefläche von Transportfahrzeugen zu der Verkehrsfläche von Laderampen einerseits von Fahrzeug zu Fahrzeug unterschiedlich ist und darüber hinaus beispielsweise durch Einfederungsvorgänge der Transportfahrzeugfederung während des Be- und Entladens variiert. Die Ladebrücke muss trotz dieser Varianz und Variabilität zu jedem Zeitpunkt des Be- und Entladevorganges eine sichere Auflage des freien Endes sicherstellen.

Ein weiteres Problem wird durch den zunehmenden Zeitdruck bei Be- und Entladevorgängen verursacht und besteht darin, dass Missverständnisse zwischen dem Be- und Entladepersonal und dem Fahrer des Transportfahrzeuges auftreten, die ein vorzeitiges Wegrollen des Fahrzeuges verursachen können und folglich die sichere Auflage des freien Endes der Ladebrücke gefährden.

Zur Vermeidung der vorgenannten Nachteile ist es bekannt, an einer Laderampe mit daran befestigter Ladebrücke unterhalb der Ladebrücke einen Ultraschallsensor anzuordnen, der in horizontaler Richtung das Vorhandensein eines Transportfahrzeuges erfassen kann und folglich ermöglicht, dass die Ladebrücke nur dann abgesenkt werden kann, wenn ein Fahrzeug vor der Laderampe steht. Eine solche Lösung ist aus DE 33 24 131 bekannt. Unter anderem aufgrund der horizontalen Messung gegen eine nicht definierte Messebene am Transportfahrzeug ist diese Maßnahme nicht dazu geeignet, Vertikalbewegungen des Transportfahrzeuges zu erfassen. Weiterhin können Horizontalbewegungen des Transportfahrzeuges im Bereich unterhalb etwa eines halben Meters nicht erfasst werden. Diese Maßnahme kann somit nicht dazu dienen, den Aufladezustand zu erfassen und so die sichere Auflage des freien Endes der Ladebrücke zu gewährleisten.

Weiterhin ist aus DE 94 09 742 U bekannt, an einer Ladebrücke mit einem Plateau und einem beweglich daran befestigtem Vorschub einen Induktivsensor zur Messung des Spaltes zwischen der Unterseite des Plateaus und dem Vorschub anzuordnen. Mit diesem Sensor kann erfasst werden, ob auf den Vorschub eine Kraft einwirkt, die dieses Spaltmaß verändern würde. Eine solche Anordnung dient dazu, zu verhindern, dass kleinere Fahrzeuge mit geringer Tragkraft durch die hydraulische Absenkung der Ladebrücke auf die Ladefläche überlastet werden. Diese Anordnung kann ebenfalls nicht den Auflagezustand der Ladebrücke erfassen, sondern ist lediglich in der Lage, eine irgendwie gerichtete Krafteinwirkung auf den Vorschub zu erfassen.

Aus DE 34 02 576 A1 und DE 33 24 131 C1 sind Ladebrücken bekannt, welche einen Sensor aufweisen, der das Vorhandensein eines LKWs im Ladebereich erfasst und eine automatische Rückstellung der Laderampe blockiert, solange ein LKW vorhanden ist bzw. eine solche veranlasst, sobald ein LKW nicht mehr vorhanden ist.

Aus DE 34 12 068 A1 ist eine Überfahrbrücke bekannt, welche einen Sensor aufweist, der die Höhe zwischen dem Ende der Ladebrücke und der Ladefläche erfasst, um die Arretierung der Ladefläche zu lösen, sobald eine für den Beladungsvorgang hinderliche Stufe entstanden ist.

Der Erfindung lag die Aufgabe zugrunde, zumindest eines der vorstehend genannten Probleme zu verringern oder vorzugsweise zu vermeiden.

Diese Aufgabe wird bei einer Ladebrücke gemäß Anspruch 1 gelöst.

Die erfindungsgemäße Ladebrücke ist vorrangig zur Befestigung an Laderampen vorgesehen, in diesem Falle liegt das freie Ende im Betriebszustand auf der Ladefläche eines Transportfahrzeuges auf. Die erfindungsgemäße Ladebrücke ist aber auch geeignet, an einem Fahrzeug befestigt zu werden. In diesem letztgenannten Fall liegt das freie Ende der Ladebrücke im Betriebszustand bei spielsweise auf einer Verkehrsfläche einer Laderampe oder einer sonstigen Fläche auf, auf welche die Waren entladen bzw. von welcher die Waren beladen werden sollen.

Die erfindungsgemäße Ladebrücke weist den Vorteil auf, dass durch den Minimalsensor der Auflagezustand der Ladebrücke erfasst werden kann und folglich durch den Minimalsensor ein betriebssicherer Auflagezustand sichergestellt werden kann. Dabei ist es in bestimmten Anwendungen vorteilhaft, wenn der Sensor ein Signal bei einem betriebssicheren Auflagezustand erzeugt, in anderen Anwendungen ist es vorteilhaft, wenn der Sensor bei betriebsunsicherem Auflagezustand ein Signal erzeugt. Grundsätzlich kann ein Minimalsensor mit binärer Zustandserfassung eingesetzt werden, d.h. es wird lediglich zwischen betriebssicherem und betriebsunsicherem Auflagezustand unterschieden. In anderen Anwendungen kann es vorteilhaft sein, einen Minimalsensor zu verwenden, der den Auflagezustand in differenzierterer Weise erfasst und auch in der Lage ist, eine Veränderung des Auflagezustandes innerhalb des betriebsicheren und/oder des betriebsunsicheren Bereiches zu erfassen und folglich zu ermöglichen, eine sich abzeichnende Änderung des Auflagezustandes von betriebssicher zu betriebsunsicher oder umgekehrt zu erfassen und folglich eine intelligentere Auswertung und Verwendung der Sensorsignale zu ermöglichen. Zur Verwirklichung dieser Ziele können auch zwei Minimalsensoren eingesetzt werden, welche zusammenwirken.

Der Minimalsensor kann zur Erfassung des Auflagezustandes beispielsweise einen Abstand zwischen Ladebrücke und Auflagefläche oder eine Kraft zwischen Ladebrücke und Auflagefläche erfassen. Zu diesem Zweck kann der Minimalsensor beispielsweise als Kontaktschalter, als Wegsensor oder als Kraftsensor ausgebildet sein.

Bei einer ersten vorteilhaften Ausführungsform ist der Minimalsensor ausgebildet, um die Einhaltung eines Mindestabstands zwischen der Vorderkante der Ladebrücke und der Hinterkante der Verkehrsfläche bzw. der Ladefläche, also der jeweiligen Auflagefläche, zu erfassen. Um eine ausreichende Abstützung des freien Endes auch bei dynamischen Vorgängen während des Be- und Entladens zu gewährleisten, ist es üblich, die Vorderkante des freien Endes der Ladebrücke so weit über die Verkehrsfläche bzw. Ladefläche zu schieben, dass ein Mindestabstand zwischen dieser Vorderkante und der Hinterkante dieser Auflagefläche eingehalten wird. Die erfindungsgemäße Ladebrücke ist vorzugsweise so ausgebildet, dass die Einhaltung dieses Mindestabstandes durch den Minimalsensor erfasst wird und folglich bei Ausrichtung der Ladebrücke eine Kontrolle durch den Sensor ermöglicht wird und darüber hinaus eine Überwachung während des Be- und Entladevorganges durch den Sensor möglich ist.

Es ist besonders bevorzugt, wenn der Minimalsensor in einem vorgegebenen Minimalabstand von der Vorderkante des freien Endes der Ladebrücke angeordnet ist und ausgebildet ist, um das Vorhandensein einer Auflagefläche im Bereich unterhalb des Minimalsensors zu erfassen. Diese Ausführungsform ermöglicht es, dass aufgrund des vom Sensor erfassten Vorhandenseins einer Auflagefläche unterhalb des Minimalsensors auf die Einhaltung des Mindestabstandes zwischen der Vorderkante des freien Endes der Ladebrücke und der Hinterkante der Verkehrsfläche bzw. der Ladefläche geschlossen werden kann. Diese Ausführungsform kann weiter fortgebildet werden, indem ein Sensor verwendet wird, der in einem in horizontaler Richtung eng begrenzten Bereich misst und dadurch insbesondere kein Signal erzeugt, wenn in einem Bereich neben dem Minimalsensor eine Auflagefläche vorhanden ist. Weiterhin lässt sich diese Ausführungsform weiter fortbilden, indem ein Sensor verwendet wird, der einen in vertikaler Richtung begrenzten und definierten Messbereich aufweist, so dass der Sensor nur dann ein Vorhandensein einer Auflagefläche erfasst, wenn diese in einem vorgegebenen Abstand oder Abstandsbereich zum Sensor liegt. Auf diese Weise wird vermieden, dass der Sensor irrtümlich auf das Vorhandensein einer Auflagefläche schließt, wenn unterhalb des Sensors in einem größeren Abstand ein Gegenstand wie beispielsweise ein Gummi-Anfahrpuffer, eine Anhängerkupplung, Teile der Beleuchtungseinrichtung oder ein Kennzeichenhalter vorhanden ist.

Bei einer weiteren Fortbildung der erfindungsgemäßen Ladebrücke ist der Minimalsensor ausgebildet, um die Einhaltung eines Höchstabstandes zwischen der Vorderkante des freien Endes der Ladebrücke und der Hinterkante der Ladefläche bzw. der Verkehrsfläche zu erfassen. Es hat sich überraschend gezeigt, dass bei Fortbildung der Erfindung in dieser Weise auch vermieden werden kann, dass beim zu weiten Ausfahren des Auflagers eine Beschädigung der sich auf der Unterfläche des Auflagers befindlichen Schweißnähte eintritt, wenn das Auflager in dieser Stellung belastet wird. Weiter kann vermieden werden, dass der Abstand zwischen Laderampe und Transportfahrzeug so gering ist, dass bei im Betriebszustand befindlicher Ladebrücke und insbesondere bei zusätzlichem Einfluss von dynamischen Vorgängen durch Be- und Entladevorgängen eine Beschädigung von Teilen der Ladebrücke durch Kollision mit Teilen des Transportfahrzeuges erfolgt. Diese Ausführungsform ist vorzugsweise mit einem differenzierten Minimalsensor realisierbar, der beispielsweise das Vorhandensein der Hinterkante der Auflagefläche unter sich erkennen kann.

Eine weitere Fortbildung besteht darin, dass mindestens ein Maximalsensor vorgesehen ist, der benachbart und in Transportrichtung beabstandet zum ersten Sensor angeordnet ist und der ausgebildet ist, um die Einhaltung eines Höchstabstandes zwischen der Vorderkante der Ladebrücke und der Hinterkante der Auflagefläche zu erfassen. Dieser Maximalsensor ermöglicht, wie zuvor beschrieben, eine Kollision von nicht zur Auf- oder Anlage vorgesehenen Teilen der Ladebrücke mit dem Transportfahrzeug bzw. der Laderampe zu erfassen und zu vermeiden. Der Maximalsensor kann dabei so ausgebildet und angeordnet sein wie zuvor für den Minimalsensor beschrieben.

Diese Ausführungsform kann weiter fortgebildet werden, indem der Maximalsensor in einem vorgegebenen Maximalabstand von der Vorderkante der Ladebrücke angeordnet und ausgebildet ist, um das Vorhandensein einer Auflagefläche im Bereich unterhalb des Maximalsensors zu erfassen. Bei dieser Ausführungsform ist eine sichere Einhaltung des Mindestabstandes und des Höchstabstandes durch ein Zusammenwirken des Minimal- und Maximalsensors möglich, indem beispielsweise die Hinterkante der Auflagefläche in dem Bereich zwischen Minimal- und Maximalsensor angeordnet wird und die Erzielung und Beibehaltung dieser Anordnung durch die Sensoren erfasst wird, indem das Vorhandensein der Auflagefläche unter dem Minimalsensor und das Nichtvorhandensein der Auflagefläche unter dem Maximalsensor detektiert wird.

Bei einer weiteren vorteilhaften Ausführungsform ist ein erster Minimalsensor vorgesehen, der in Transportrichtung seitlich am freien Ende der Ladebrücke, insbesondere seitlich am Ladebrückenauflager, angeordnet ist, und ein zweiter Minimalsensor vorgesehen ist, der gegenüberliegend zum ersten Minimalsensor in Transportrichtung an der anderen Seitenkante des Ladebrückenauflagers angeordnet ist. Grundsätzlich kann zwar die erfindungsgemäße Ladebrücke mit nur einem Minimalsensor, der vorzugsweise in der Mitte zwischen den Seitenkanten des Auflagers der Laderampe angeordnet ist, ausgerüstet sein. Mit dieser einfachsten Ausführungsform könnte ein betriebssicherer Auflagezustand bereits wesentlich besser gewährleistet werden, als wenn die bekannten Ladebrücken ohne Minimalsensor verwendet werden. Diese Ausführungsform weist aber den Nachteil auf, dass einerseits der Sensor im hochbeanspruchten Mittelbereich des freien Endes der Ladebrücke angeordnet ist und dass darüber hinaus nicht erfasst werden kann, ob beispielsweise aufgrund eines nicht genau in senkrechter Längsausrichtung zur Vorderkante des freien Endes der Ladebrücke eingeparkten Transportfahrzeugs die sichere Auflage des freien Endes über die gesamte Breite der Ladebrücke gewährleistet ist.

Grundsätzlich ist bei einer Ausführungsform auch die seitliche Anordnung eines einzigen Minimalsensors ausführbar, wodurch zumindest die Lage des Sensors aus der hochbelasteten Mitte der Ladebrücke an den belastungstechnisch günstiger gelegenen Rand des freien Endes der Laderampe verlagert wird. Eine Betriebsunsicherheit durch schräge Auflage des freien Endes der Ladebrücke kann aber auch durch diese Ausführungsform nicht erfasst werden. Diesen Nachteilen hilft die vorgenannte Fortbildung mit zwei Minimalsensoren an beiden Seiten der Laderampe ab, indem die Einhaltung des Minimalabstandes auf beiden Seiten der Ladebrücke erfasst wird und folglich auch eine Schrägstellung der vorderen Kante des freien Endes der Ladebrücke zur Hinterkante der Auflagefläche erfasst werden kann.

Diese Ausführungsform kann dann weiter fortgebildet werden, indem ein erster Maximalsensor vorgesehen ist, der in Transportrichtung beabstandet und benachbart zum ersten Minimalsensor seitlich an der Laderampe angeordnet ist. Hierdurch wird eine Grundsicherheit gegen Überschreiten des Maximalabstandes erreicht.

Diese Ausführungsform kann noch weiter fortgebildet werden, indem ein zweiter Maximalsensor vorgesehen ist, der in Transportrichtung seitlich gegenüberliegend und symmetrisch zum ersten Maximalsensor an der Laderampe angeordnet ist. Mit dieser Ausführungsform wird eine Über- und Unterschreitung eines zwischen Mindestabstand und Maximalabstand liegenden Sollbereiches in jeder denkbaren Anordnung des Transportfahrzeuges zur Laderampe erfasst und es kann folglich ein betriebssicherer Zustand im Hinblick auf alle denkbaren - auch noch so unwahrscheinlichen - Fehlkonstellationen gewährleistet werden.

Es ist weiterhin besonders bevorzugt, wenn der Minimalsensor und/oder der Maximalsensor ein optisch wirkender Sensor, insbesondere ein Lichtschrankensensor, oder ein mechanisch wirkender Sensor, insbesondere ein mechanischer Tastsensor, oder ein induktiv oder kapazitiv wirkender Abstandssensor oder ein Kraftsensor, insbesondere ein nach dem Dehnungsmessprinzip wirkender Kraftserisor, ist. Dabei ist ein optisch wirkender Sensor, wie beispielsweise eine Bilderfassung mittels Video, eine Laserabstandsmessung, ein Lichtschrankensensor oder Ähnliches aufgrund der Robustheit dieser Art der Sensoren und der Möglichkeit der Versenkung dieser Sensoren in der Ladebrücke und der solcherart möglichen berührungslosen Messung bevorzugt. Ein mechanisch wirkender Sensor ist in vielen Anmeldungen u.a. aufgrund der geringen Kosten bevorzugt. Ein induktiv oder kapazitiv wirkender Abstandssensor kann ebenfalls berührungslos messen und ist somit unempfindlich gegenüber der Auflagekraft der Ladebrücke im Bereich des Sensors. Weiterhin ist in einigen Ausführungsformen die Verwendung eines Kraftsensors vorteilhaft. In diesem Fall kann neben der binären Erfassung, ob eine Auflage im Bereich des Sensors erfolgt oder nicht, darüber hinaus eine Erfassung der Kraft, mit der diese Auflage stattfindet, erfolgen, und folglich ein durch Überschreitung einer Maximalauflagekraft unsicherer Betriebszustand ebenfalls erfasst werden.

Es ist besonders bevorzugt, wenn der Minimalsensor und/oder der Maximalsensor nicht über die Unterfläche des Auflagers der Ladebrücke hinausragt. Hierdurch wird eine Beschädigung der Sensoren wirkungsvoll vermieden. Der Sensor ist vorzugsweise in eine Vertiefung in der Unterseite der Ladebrücke eingelassen und misst aus dieser Vertiefung heraus das Vorhandensein bzw. Nichtvorhandensein einer Auflagefläche.

Es ist weiterhin bevorzugt, wenn der Minimalsensor und/oder der Maximalsensor so ausgebildet sind/ist, dass er die am freien Ende der Ladebrücke maximal auftretende Auflagerkraft aufnehmen kann. Hierdurch können Überlastungen der Ladebrücke und ggf. des Transportfahrzeuges, an dem die Ladebrücke befestigt oder auf welches die Ladebrücke aufgelegt ist, erfasst und folglich vermieden werden.

Es ist weiterhin bevorzugt, wenn die Ladebrücke ein Plateau, an dem das befestigte Ende ausgebildet ist, und einen an dem Plateau beweglich befestigten Vorschub, an dem das freie Ende ausgebildet ist, umfasst und der Minimalsensor und/oder der Maximalsensor an dem Vorschub befestigt sind/ist. Eine solche Ausbildung der Ladebrücke ermöglicht die Überbrückung variabler Abstände zwischen dem Transportfahrzeug und der Laderampe, indem der Vorschub der Ladebrücke soweit bewegt, beispielsweise vorgeschoben oder indem der LKW vor dem Klappkeil der Ladebrücke soweit hin und her rangiert wird, bis eine betriebssichere Auflage durch die Sensoren erfasst und gewährleistet wird.

Weiterhin ist es dabei bevorzugt, wenn der Vorschub in der Weise relativ beweglich am Plateau befestigt ist, dass die Länge der Ladebrücke in Transportrichtung durch diese Relativbewegung veränderbar ist, und dass Mittel vorhanden sind zum Anpassen der Ladebrückenlänge durch Bewegung des Verschubs bei Erfassung einer Unterschreitung des Minimalabstandes und/oder einer Überschreitung des Maximalabstandes. Bei dieser Ausführungsform können die Sensorsignale verwendet werden, um bei Erfassung eines betriebsunsicheren Zustandes die Ladebrücke zu verlängern oder zu verkürzen, um auf diese Weise einen betriebssicheren Zustand wieder herzustellen.

Eine weitere vorteilhafte Ausführungsform umfasst eine optische oder akustische Signalanlage zur Signalisierung eines vom Minimalsensor oder Maximalsensor erfassten betriebsunsicheren Auflagezustandes, insbesondere einer vom Minimalsensor erfassten Unterschreitung eines Minimalabstandes und/oder einer vom Maximalsensor erfassten Überschreitung eines Maximalabstandes. Diese Fortbildung ermöglicht eine Warnung des Benutzers vor einem betriebsunsichrem Zustand.

Dabei kann vorteilhafterweise eine im Bereich der Oberfläche der Ladebrücke, vorzugsweise im seitlichen Bereich des Auflagers oberhalb der Sensoren angeordnet, optische Signalanlage zur Signalisierung eines betriebssicheren Auflagezustands und/oder eines betriebsunsicheren Auflagezustandes vorgesehen sein. Eine solcherart angeordnete Signalanlage befindet sich in dem Bereich, der üblicherweise auch bei bekannten Ladebrücken vom Benutzer zur Überprüfung der Betriebssicherheit kontrolliert wird und ermöglicht eine grundsätzlich bessere und auch bei schlechten Sichtbedingungen erkennbare Signalisierung betriebssicherer oder betriebsunsicherer Auflagezustände.

Eine weitere Fortbildung umfasst Mittel zur Speicherung der von den Sensoren erfassten Daten, insbesondere der Anzahl der Unterschreitung bzw. Überschreitung der zulässigen Abstände. Hierdurch können beispielsweise zur Unfallverhütung nützliche Statistiken oder sonstige Auswertungen der aufgetretenen Betriebszustände der Ladebrücke erstellt werden.

Weiterhin ist es vorteilhaft, wenn der Minimalsensor und/oder der Maximalsensor mit Mitteln zur Steuerung des Ausfahrens der Ladebrücke, insbesondere der Absenkung, Anhebung und/oder Längenänderung der Ladebrücke verbunden ist/sind zur automatischen Verfahrung der Ladebrücke aus einem Ruhezustand in einen Betriebszustand und zurück. Bei dieser Ausführungsform kann auf eine manuell gesteuerte Verfahrung der Ladebrücke verzichtet werden und folglich eine komfortablere Bedienbarkeit der Ladebrücke erreicht werden. Weiterhin vermeidet diese Ausführungsform durch Nichtbeachtung der Sensorsignale aufgetretene Fehlbedienungen und Fehlplatzierungen der Ladebrücke.

Es ist besonders bevorzugt, wenn der Minimalsensor und/oder der Maximalsensor an einer seitlich an der Ladebrücke befestigten Sensorstrebe angeordnet ist/sind, deren Geometrie vorzugsweise dem Profilquerschnitt der Ladebrücke im Befestigungsbereich von Sensorstrebe und Ladebrücke folgt. Auf diese Weise ist einerseits eine einfache Fertigung des Bauteils mit dem Sensor möglich. Darüber hinaus ermöglicht diese Fortbildung die Ausrüstung von Ladebrücken mit dem erfindungsgemäßen Minimal- oder Maximalsensor ohne tiefgreifenden konstruktive Änderungen an der Ladebrücke selbst. Ein weiterer Vorteil besteht darin, dass die Sensorstrebe auf diese Weise aus der lasttragenden Funktion der Ladebrücke herausgenommen werden kann und folglich die durch die Sensorintegration häufig auftretende Schwächung der Struktur keine Rolle spielt.

Ein weiterer Aspekt der Erfindung ist eine Sensorstrebe zur Befestigung an einer Ladebrücke, wobei die Sensorstrebe welche mindestens einen Minimalsensor und/oder mindestens einen Maximalsensor, der nach einem der vorhergehenden Ansprüche ausgebildet ist, umfasst, und der vorzugsweise so an der Sensorstrebe angeordnet ist, dass bei Befestigung der Sensorstrebe an einer Ladebrücke der Minimalsensor und/oder der Maximalsensor nach einem der vorstehenden Ansprüche angeordnet ist. Eine solche Sensorstrebe ermöglicht die Nachrüstung bereits ausgelieferter Ladebrücken mit den erfindungsgemäßen Minimal- und Maximalsensoren, um auf dieser Weise zu einer erfindungsgemäßen Ladebrücke, wie zuvor beschrieben, zu gelangen. Die erfindungsgemäße Sensorstrebe muss zu diesem Zweck lediglich auf einer Seite der Ladebrücke befestigt werden. Alternativ kann auch, bevorzugt bei mehrteiligen Ladebrücken, für breite und schmale Ladeflächen die erfindungemäße Sensorstrebe nur am Mittelteil der Ladebrücke einseitig oder beidseitig befestigt werden. Insbesondere ist es bevorzugt, jeweils eine Sensorstrebe auf beiden Seiten der Ladebrücke zu befestigen.

Ein weiterer Aspekt der Erfindung ist ein Verfahren gemäß Anspruch 22 gelöst. Dieses Verfahren ermöglicht einen besonders sicheren Betrieb der Ladebrücke. Vorteilhafte Ausführungsformen des erfindungsgemäßen Verfahrens sind in den Unteransprüchen 22 bis 25 beschrieben und zu den mit diesen Verfahrensfortbildungen erzielten Vorteilen und deren Ausführung im Detail wird auf die vorangegangene Beschreibung der entsprechend fortgebildeten Ladebrücke verwiesen.

Eine bevorzugte Ausführungsform wird anhand der anhängenden Figuren beschreiben. Es zeigen:
- Figur 1: eine teilgeschnittene Seitenansicht einer ersten Ausführungsform der erfindungsgemäßen Ladebrücke, befestigt an einer Laderampe und in einer Betriebsposition auf die Ladefläche eines Lastkraftwagens aufgelegt,
- Figur 2: eine teilgeschnittene Draufsicht auf die Ausführungsform gemäß Figur 1,
- Figur 3: eine teilgeschnittene Seitenansicht des Details der Auflage des freien Endes der erfindungsgemäßen Ladebrücke gemäß Figur 1 auf der Ladefläche des Lastkraftwagens,
- Figur 4a: eine teilgeschnittene Seitenansicht des Vorschubs der Ausführungsform gemäß Figur 1 mit integriertem Minimalsensor,
- Figur 4b: eine teilgeschnittene Draufsicht auf die Anordnung gemäß Figur 4a,
- Figur 5a: eine teilgeschnittene Seitenansicht des Vorschubs einer zweiten erfindungsgemäßen Ausführungsform mit integriertem Minimal- und Maximalsensor, und
- Figur 5b: eine teilgeschnittene Draufsicht der Anordnung gemäß Figur 5a.

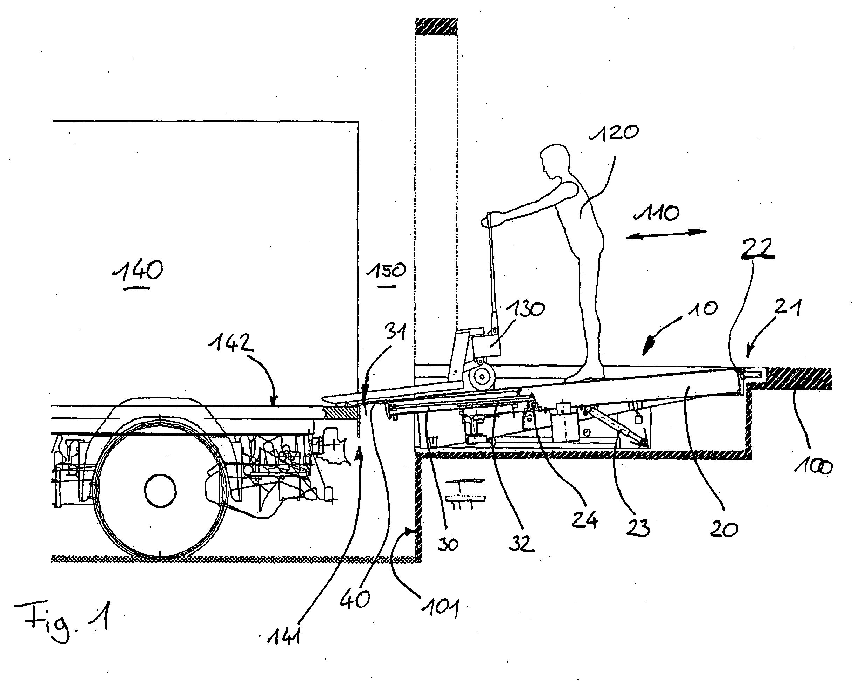

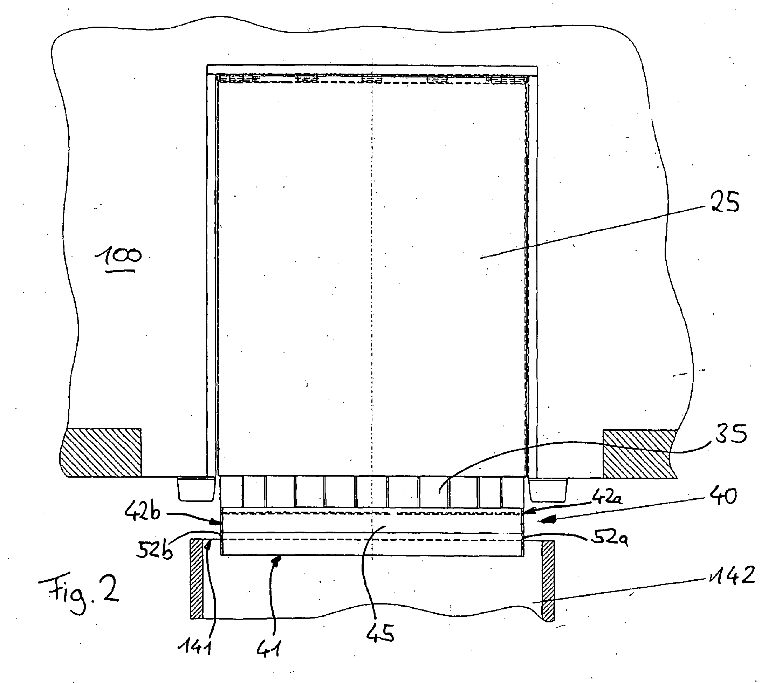

Die in den Figuren 1 bis 3 dargestellte Ladebrücke 10 umfasst ein Plateau 20, welches an einem Ende 21 um eine horizontal liegende Achse drehbar an einer Laderampe 100 befestigt ist. Die horizontal liegende Achse 22 ist senkrecht zur mit einem Pfeil 110 angedeuteten Transportrichtung über die Ladebrücke 10 angeordnet und ermöglicht ein Verschwenken der gesamten Ladebrücke um auf diese Weise eine im Wesentlichen vertikale Bewegung am freien Ende 31 der Ladebrücke zu erzielen.

Das Plateau 20 weist auf der Oberseite eine Deckfläche 25 auf und ist auf der Unterseite mittels eines hydraulischen Zylinders 23 an der Laderampe 100 angelenkt. Der hydraulische Zylinder 23 ermöglicht somit eine Verschwenkung des Plateaus 20 um die horizontale Achse 22. Der hydraulische Zylinder 23 wird betätigt, um die Ladebrücke 10 aus einer Ruheposition in eine Betriebsposition und zurück zu verschwenken. Wenn die Ladebrücke in Betriebsposition ist, so wird der hydraulische Zylinder 23 so verschaltet, dass er passiv ein- und ausfahrbar ist, so dass die dann am freien Ende 31 aufliegende Ladebrücke einer vertikalen Änderung der Auflagefläche frei folgen kann.

Am Plateau 20 ist ein in etwa in Transportrichtung 110 verschieblicher Vorschub 30 befestigt. Der Vorschub 30 weist eine obere Fläche 35 auf und ist in Bezug auf das Plateau 20 so angeordnet, dass die zum Transport dienenden Oberflächen 25, 35 des Plateaus 20 und des Vorschubs 30 möglichst stufenlos ineinander übergehen und ein Benutzer 120 folglich bequem mit einem Hubwagen 130 oder ähnlichem über die Ladebrücke fahren kann.

Der Vorschub 30 kann relativ zum Plateau 20 durch einen Hydraulikzylinder und mittels zweier Zahnstangen 32, die über eine Welle mit Zahnrädern 24 gekoppelt sind, in Transportrichtung verschoben werden. Auf diese Weise kann der Spalt 150 zwischen der Hinterkante 141 eines geparkten Lastkraftwagen 140 und dem Ende 101 der Laderampe 100 in einem variablen Bereich überbrückt werden und folglich vermieden werden, dass der Lastkraftwagen zum Be- und Entladen in eine präzise vorbestimmte Parkposition gefahren werden muss.

Der Vorschub 30 weist an seinem zum Lastkraftwagen weisenden Ende 31 ein Auflageteil 40 auf, welches fest mit dem Vorschub verbunden ist und als hochbelastbares Aluminiumprofil oder als Stahlprofil ausgeführt ist. Das Auflageteil 40 bildet das freie Ende der Ladebrücke 10 aus und liegt im Betriebszustand mit seiner Vorderkante 41 auf der Ladefläche 142 des Lastkraftwagens 140 auf. Das Auflageteil weist eine bündig zur Oberfläche 35 des Vorschubs ausgebildete obere Fläche 45 auf.

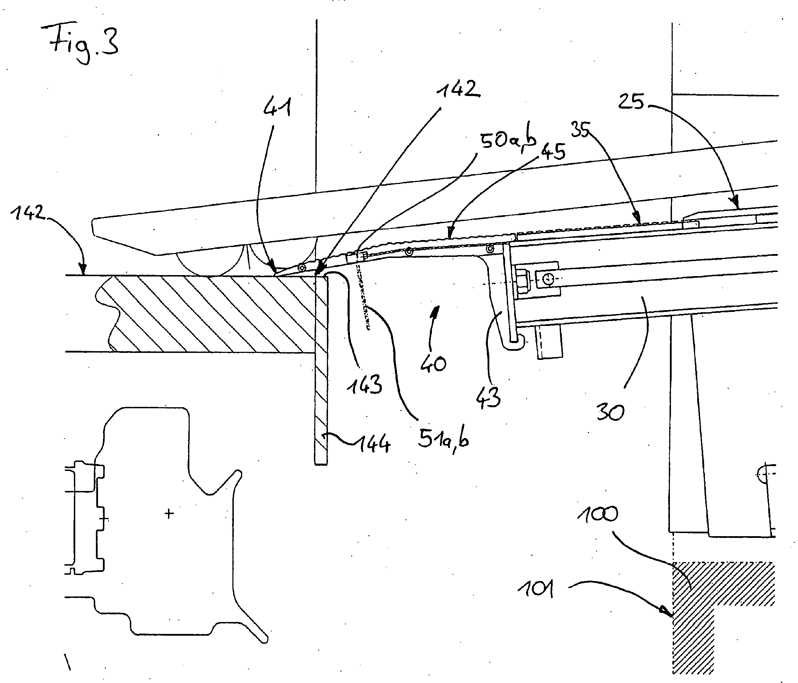

Wie insbesondere in Figur 3 gut zu erkennen, muss zur Erzielung eines betriebssicheren Zustandes die Vorderkante 41 des Auflageteils 40 von der Hinterkante 143 der Ladefläche 142 um einen Mindestabstand beabstandet sein, um auf diese Weise sicherzustellen, dass die Vorderkante 41 nicht bei Vertikal- oder Horizontalbewegungen der Ladefläche 142 vollständig von der Ladefläche 142 über die Hinterkante 143 abrutscht und dann überhaupt keine Auflage der Vorderkante mehr besteht.

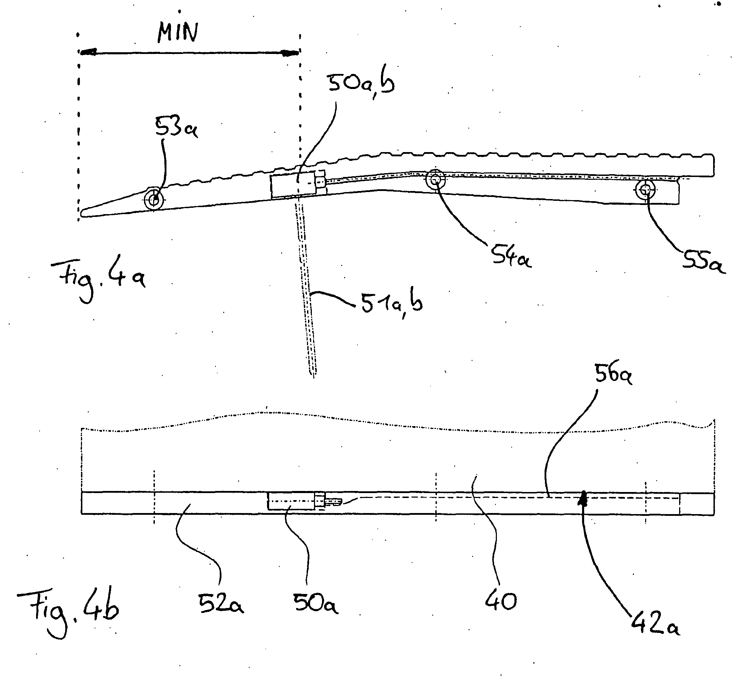

Zu diesem Zweck ist, wie in Fig. 4a, b abgebildet, an den Seitenkanten 42a, b des Auflageteils 40 jeweils eine Sensorstrebe 52a, b befestigt und in eine Ausnehmung auf der Unterseite der Sensorstreben 52a, b ist jeweils ein erster und zweiter Minimalsensor 50a, b integriert, der in etwa vertikaler Richtung einen als Lichtschranke dienenden Lichtstrahl 51a, b aussendet. Die erste Sensorstrebe 52a, mit dem ersten Minimalsensor 50a ist seitlich zur Transportrichtung an dem Auflageteil 40 im unmittelbaren Randbereich des Auflageteils befestigt. Die zweite Sensorstrebe 52b mit dem zweiten Minimalsensor 50b ist auf der gegenüberliegenden Seite symmetrisch zu der in Transportrichtung liegenden Mittellängsachse des Auflageteils 40 ebenfalls im unmittelbaren Randbereich des Auflageteils 40 befestigt.

Die Minimalsensoren 50a, b sind jeweils in die Sensorleiste 52a, b integriert, deren Profil dem Profilquerschnitt des Auflageteils 40 entspricht und die an den Seitenkanten 42a, b des Auflageteils 40 mittels dreier Schrauben 53a, b, 54a, b und 55a, b befestigt sind.

Die Sensorsignale der Minimalsensoren 50a, b werden über ein in einer zur Seitenfläche des Auflageteils 40 weisenden Nut in der Sensorstrebe 52a, b verlegtes Kabel 56a, b zu einer Signaleinrichtung, Steuerungseinrichtung oder Datenerfassungseinrichtung oder ähnlichem geleitet.

Der den Erfassungsbereich des Minimalsensors 50a, b darstellende Lichtstrahl ist in einem vertikalen Minimalabstand MIN von der Vorderkante 41 beabstandet. Auf dieser Weise kann sichergestellt werden, dass die Vorderkante 41 in einem Mindestabstand von der Hinterkante 143 beabstandet ist, wenn innerhalb des Lichtstrahles 51 des Minimalsensors das Vorhandensein der Auflagefläche erfasst wird. Dabei ist bei der konstruktiven Auswahl des Abstandes MIN zu berücksichtigen, dass der Minimalsensor bereits die Kante der abgeklappten Bordwand 144 als Auflagefläche erkennen könnte und folglich ein entsprechender Aufschlag auf das Maß MIN im Verhältnis zum erforderlichen Mindestabstand zuzugeben ist. Die in Figur 3 dargestellte Betriebsposition der Ladebrücke 10 stellt somit, da vom Minimalsensor 50 keine Auflagefläche im Erfassungsbereich des Sensors detektiert wird, einen betriebsunsicheren Auflagezustand dar.

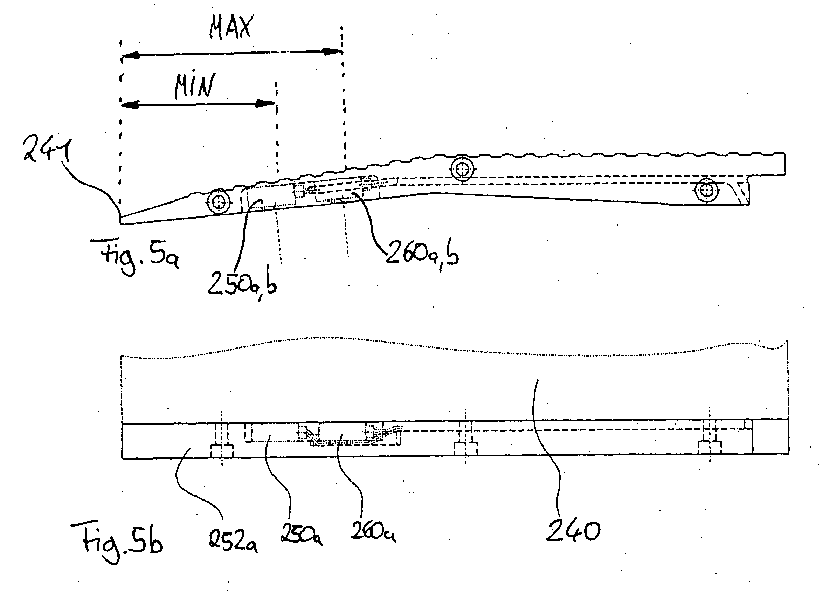

In den Figuren 5a, b ist eine alternative Ausführungsform der Erfindung dargestellt, bei der in jeweils einer an einem Auflageteil 240 befestigten Sensorstrebe 252a, b jeweils ein erster und zweiter Minimalsensor 250a, b und ein erster und zweiter Maximalsensor 260a, b in entsprechende Vertiefungen eingesetzt ist.

Der Messstrahl 251a, b des ersten und zweiten Minimalsensors 250a, b ist von der Vorderkante 241 der Sensorstrebe 240 in einem Minimalabstand MIN angeordnet und erfasst, wie zuvor beschrieben, die Einhaltung eines Mindestabstandes zwischen der Vorderkante 241 und der Hinterkante der Ladefläche eines Lastkraftwagens.

Der Messstrahl 261a, b des Maximalsensors 260a, b ist von der Vorderkante 241 in einem Maximalabstand MAX angeordnet und erfasst die Einhaltung eines Höchstabstandes zwischen Vorderkante 241 und der Hinterkante einer Ladefläche eines Lastkraftwagens. Auch hier ist, wie zuvor beschrieben, ggf. eine Sicherheitsdifferenz zwischen dem Maß MAX und dem Höchstabstand zu berücksichtigen. Die Serisorstrebe 252a, b kann anstelle der in den Figuren 4a, b gezeigten Sensorstrebe an den Seitenkanten des Auflageteils 240 befestigt werden und ermöglicht so die Erfassung der Einhaltung eines Mindest- und eines Höchstabstandes. Bei dieser Erfassung wird der Abstand zwischen der Vorderkante 241 und der Hinterkante der Ladefläche so eingestellt, dass der Minimalsensor 250a, b das Vorhandensein einer Ladefläche in seinem Messbereich detektiert und der Maximalsensor 260a, b das Nichtvorhandensein einer solchen Ladefläche in seinem Messbereich detektiert. Die von den Sensoren 250a, b und 260a, b solcherart mittelbar detektierte Endkante der Ladefläche liegt somit zwischen den beiden Messstrahlen der Sensoren 250a, b und 260a, b.

Die Fortbildung gemäß den Figuren 5a, b ermöglicht so, einerseits zu vermeiden, dass die Vorderkante in zu geringem Abstand zur Hinterkante der Ladefläche aufliegt und folglich ein Abrutschen des freien Endes der Ladebrücke droht und darüber hinaus zu vermeiden, dass die Vorderkante zu weit im Inneren des Lastkraftwagens auf dessen Ladefläche aufliegt und folglich eine Beschädigung von Teilen der Ladebrücke, wie beispielsweise eine Beschädigung der sich bei vielen Ladebrücken auf der Unterfläche des Auflagers befindlichen Schweißnähte, durch Kontakt mit Teilen des Lastkraftwagens bei Belastung des Auflagers auftritt.

## Patentansprüche

1. Ladebrücke (10) zur Überbrückung der Distanz (150) zwischen einem Transportfahrzeug und einer Laderampe (100) zum Zwecke des Transports von Waren über die Ladebrücke, umfassend
- ein befestigtes Ende (21), welches an einer Laderampe oder einem Transportfahrzeug beweglich befestigbar ist,
- ein freies Ende (31), welches ausgebildet ist, um im Bereich einer Ladefläche eines Transportfahrzeugs bzw. einer Verkehrsfläche einer Laderampe aufzuliegen, und
- eine Deckfläche (25, 35, 45), die sich in Transportrichtung zwischen dem befestigten Ende und dem freien Ende erstreckt,
**dadurch gekennzeichnet, dass** im Auflagebereich des freien Endes (31) mindestens ein Minimalsensor (50a, b) vorhanden ist zur Erfassung des Auflagezustands der Ladebrücke.

2. Ladebrücke nach Anspruch 1,
**dadurch gekennzeichnet, dass** der Minimalsensor (50a, b) ausgebildet ist, um die Einhaltung eines Mindestabstands zwischen der Vorderkante (41) der Ladebrücke und der Hinterkante (143) der Verkehrsfläche bzw. der Ladefläche zu erfassen.

3. Ladebrücke nach Anspruch 1 oder 2,
**dadurch gekennzeichnet, dass** der Minimalsensor (50a, b) in einem vorgegebenen Minimalabstand (MIN) von der Vorderkante (41) des freien Endes (31) der Ladebrücke angeordnet ist und ausgebildet ist, um das Vorhandensein einer Auflagefläche im Bereich unterhalb des Minimalsensors zu erfassen.

4. Ladebrücke nach einem der vorhergehenden Ansprüche,
**dadurch gekennzeichnet, dass** der Minimalsensor weiterhin ausgebildet ist, um die Einhaltung eines Höchstabstandes zwischen der Vorderkante (41) des freien Endes der Ladebrücke und der Hinterkante (143) der Ladefläche bzw. der Verkehrsfläche zu erfassen.

5. Ladebrücke nach einem der vorhergehenden Ansprüche,
**dadurch gekennzeichnet, dass** mindestens ein Maximalsensor (260a, b) vorgesehen ist, der benachbart und in Transportrichtung beabstandet zum Minimalsensor (250a, b) angeordnet ist und der ausgebildet ist, um die Einhaltung eines Höchstabstandes zwischen der Vorderkante der Ladebrücke und der Hinterkante der Verkehrsfläche bzw. der Ladefläche zu erfassen.

6. Ladebrücke nach Anspruch 5,
**dadurch gekennzeichnet, dass** der Maximalsensor (260a, b) in einem vorgegebenen Maximalabstand (MAX) von der Vorderkante (241) der Ladebrücke angeordnet ist und ausgebildet ist, um das Vorhandensein einer Auflagefläche im Bereich unterhalb des Maximalsensors zu erfassen.

7. Ladebrücke nach einem der vorhergehenden Ansprüche,
**dadurch gekennzeichnet, dass** ein erster Minimalsensor (50a; 250a) vorgesehen ist, der in Transportrichtung (110) seitlich an der Laderampe angeordnet ist und ein zweiter Minimalsensor (50b; 250b) vorgesehen ist, der in Transportrichtung (110) seitlich gegenüberliegend zum ersten Minimalsensor an der Ladebrücke angeordnet ist.

8. Ladebrücke nach Anspruch 7,
**dadurch gekennzeichnet, dass** ein erster Maximalsensor (260a) vorgesehen ist, der in Transportrichtung (110) beabstandet und benachbart zum ersten Minimalsensor (250a) seitlich an der Laderampe angeordnet ist.

9. Ladebrücke nach Anspruch 8,
**dadurch gekennzeichnet, dass** ein zweiter Maximalsensor (260b) vorgesehen ist, der in Transportrichtung (110) seitlich gegenüberliegend und symmetrisch zum ersten Maximalsensor (260a) an der Laderampe angeordnet ist.

10. Ladebrücke nach einem der vorhergehenden Ansprüche,
**dadurch gekennzeichnet, dass** der Minimalsensor und/oder der Maximalsensor
- ein optisch wirkender Sensor, insbesondere ein Lichtschrankensensor, oder
- ein mechanisch wirkender Sensor, insbesondere ein mechanischer Tastsensor, oder
- ein induktiv oder kapazitiv wirkender Abstandssensor, oder
- ein Kraftsensor, insbesondere ein nach dem Dehnungsmessprinzip wirkender Kraftsensor ist.

11. Ladebrücke nach einem der vorhergehenden Ansprüche,
**dadurch gekennzeichnet, dass** der Minimalsensor und/oder der Maximalsensor nicht über die Unterfläche der Ladebrücke hinausragt.

12. Ladebrücke nach einem der vorhergehenden Ansprüche,
**dadurch gekennzeichnet, dass** der Minimalsensor und/oder der Maximalsensor so ausgebildet ist, dass er die am freien Ende (31) der Ladebrücke maximal auftretende Auflagerkraft aufnehmen kann.

13. Ladebrücke nach einem der vorhergehenden Ansprüche,
**dadurch gekennzeichnet, dass** die Ladebrücke ein Plateau (20), an dem das befestigte Ende (21) ausgebildet ist, und einen an dem Plateau beweglich befestigten Vorschub (30), an dem das freie Ende (31)ausgebildet ist, umfasst und der Minimalsensor und/oder der Maximalsensor an dem Vorschub befestigt ist/sind.

14. Ladebrücke nach Anspruch 13,
**dadurch gekennzeichnet, dass** der Vorschub (30) in der Weise relativ beweglich am Plateau (20) befestigt ist, dass die Länge der Ladebrücke in Transportrichtung (110) durch diese Relativbewegung veränderbar ist, und dass Mittel (32, 24) vorhanden sind zum Anpassen der Ladebrückenlänge bei Erfassung einer Unterschreitung des Mindestabstandes und/oder einer Überschreitung des Höchstabstandes.

15. Ladebrücke nach einem der vorhergehenden Ansprüche,
**gekennzeichnet durch** eine optische oder akustische Signalanlage zur Signalisierung eines vom Minimalsensor oder Maximalsensor erfassten betriebsunsicheren Auflagezustandes, insbesondere einer vom Minimalsensor erfassten Unterschreitung eines Mindestabstandes und/oder einer vom Maximalsensor erfassten Überschreitung eines Höchstabstandes.

16. Ladebrücke nach Anspruch 15,
**gekennzeichnet durch** eine im Bereich der Oberfläche der Ladebrücke, vorzugsweise im Bereich oberhalb der Sensoren angeordnete, optische Signalanlage zur Signalisierung eines betriebssicheren Auflagezustands und/oder eines betriebsunsicheren Auflagezustandes.

17. Ladebrücke nach einem der vorhergehenden Ansprüche,
**gekennzeichnet durch** Mittel zur Speicherung der von den Sensoren erfassten Daten, insbesondere der Anzahl der Unterschreitung bzw. Überschreitung der zulässigen Abstände.

18. Ladebrücke nach einem der vorhergehenden Ansprüche,
**dadurch gekennzeichnet, dass** der Minimalsensor und/oder der Maximalsensor mit Mitteln zur Steuerung der Absenkung und/oder Längenänderung der Ladebrücke verbunden sind zur automatischen Verfahrung der Ladebrücke aus einem Ruhezustand in einen Betriebszustand und zurück.

19. Ladebrücke nach einem der vorhergehenden Ansprüche,
**dadurch gekennzeichnet, dass** der Minimalsensor und/oder der Maximalsensor an einer seitlich an der Ladebrücke befestigten Sensorstrebe angeordnet sind, deren Geometrie vorzugsweise dem Profilquerschnitt der Ladebrücke im Befestigungsbereich von Strebe und Ladebrücke folgt.

20. Vorschub zur Befestigung am Plateau (20) einer Ladebrücke nach einem der vorstehenden Ansprüche, **gekennzeichnet durch** einen Minimalsensor und/oder einem Maximalsensor zur Erfassung des Auflagezustands der Ladebrücke.

21. Sensorstrebe (52, a, b; 252a, b) zur Befestigung an einer Ladebrücke nach einem der vorstehenden Ansprüche, **gekennzeichnet durch** mindestens einen Minimalsensor (50a, b; 250a, b) und/oder mindestens einen Maximalsensor (260a, b) zur Erfassung des Auflagezustands der Ladebrücke.

22. Verfahren zu Überwachung des Auflagezustandes einer Ladebrücke auf einer Ladefläche eines Transportfahrzeugs oder einer Verkehrsfläche einer Laderampe,
**dadurch gekennzeichnet, dass** der Auflagezustand der Ladebrücke
a) mittels im Bereich eines freien Endes (31) der Ladebrücke angeordneter Minimalsensoren (50a, b; 250a) zur Erfassung der Unterschreitung eines Mindestabstandes der Vorderkante (41; 241) des freien Endes der Ladebrücke zu der Kante (141) der Auflagefläche und/oder
b) mittels im Bereich eines freien Endes der Ladebrücke angeordneter Maximalsensoren (260a) zur Erfassung der Überschreitung eines Höchstabstandes der Vorderkante des freien Endes der Ladebrücke zu der Kante der Auflagefläche erfasst wird.

23. Verfahren nach Anspruch 22,
**dadurch gekennzeichnet, dass** in Abhängigkeit des Signals des Minimalsensors und/oder des Maximalsensors ein optisches oder akustisches Warnsignal ausgelöst wird.

24. Verfahren nach Anspruch 22 oder 23,
**dadurch gekennzeichnet, dass** die Ladebrücke oder ein Abschnitt der Ladebrücke in Abhängigkeit der Erfassung eines betriebsunsicheren Auflagezustandes mittels des Signals des Minimalsensors und/oder des Maximalsensors die Ladebrücke verfahren wird, um einen betriebssicheren Auflagezustand zu erreichen.

25. Verfahren nach einem der Ansprüche 22 bis 24,
**dadurch gekennzeichnet, dass** die von dem Minimalsensor und/oder dem Maximalsensor erfassten Daten in einer Speichervorrichtung gespeichert werden.

26. Verfahren nach einem der Ansprüche 22 bis 25,
**dadurch gekennzeichnet, dass** die von dem Minimalsensor und/oder dem Maximalsensor erfassten Daten an eine zentrale Steuerstelle geleitet werden zur dortigen Anzeige des Auflagezustands der Ladebrücke.

## Claims

1. A loading bridge (10) for bridging over the distance (150) between a transport vehicle and a loading platform (100) for the purposes of transporting articles over the loading bridge, including
- a fixed end (21) which can be movably fixed to a loading platform or a transport vehicle,
- a free end (31) which is designed to be supported in the region of a load surface of a transport vehicle or a traffic surface of a loading platform, and
- a cover surface (25, 35, 45) which extends in the transport direction between the fixed end and the free end,
**characterised in that** at least one minimal sensor (50a, b) is present in the support region of the free end (31) for detecting the support condition of the loading bridge.

2. A loading bridge according to claim 1 **characterised in that** the minimal sensor (50a, b) is adapted to detect the maintenance of a minimum spacing between the front edge (41) of the loading bridge and the rear edge (143) of the traffic surface or the load surface respectively.

3. A loading bridge according to claim 1 or claim 2 **characterised in that** the minimal sensor (50a, b) is arranged at a predetermined minimum spacing (MIN) from the front edge (41) of the free end (31) of the loading bridge and is adapted to detect the presence of a support surface in the region beneath the minimal sensor.

4. A loading bridge according to one of the preceding claims **characterised in that** the minimal sensor is further adapted to detect the maintenance of a maximum spacing between the front edge (41) of the free end of the loading bridge and the rear edge (143) of the load surface or the traffic surface respectively.

5. A loading bridge according to one of the preceding claims **characterised in that** there is provided at least one maximal sensor (260a, b) which is arranged in adjacent relationship and spaced in the transport direction in relation to the minimal sensor (250a, b) and which is adapted to detect the maintenance of a maximum spacing between the front edge of the loading bridge and the rear edge of the traffic surface or the load surface respectively.

6. A loading bridge according to claim 5 **characterised in that** the maximal sensor (260a, b) is arranged at a predetermined maximum spacing (MAX) from the front edge (241) of the loading bridge and is adapted to detect the presence of a support surface in the region beneath the maximal sensor.

7. A loading bridge according to one of the preceding claims **characterised in that** there is provided a first minimal sensor (50a, 250a) which is arranged in the transport direction (110) laterally on the loading platform and there is provided a second minimal sensor (50a, 250b) which is arranged in the transport direction (110) laterally in opposite relationship to the first minimal sensor on the loading bridge.

8. A loading bridge according to claim 7 **characterised in that** there is provided a first maximal sensor (260a) which is arranged In the transport direction (110) in spaced relationship and adjacent to the first minimal sensor (250a) laterally on the loading platform.

9. A loading bridge according to claim 8 **characterised in that** there is provided a second maximal sensor (260b) which is arranged in the transport direction (110) laterally in opposite relationship and symmetrically with respect to the first maximal sensor (260a) on the loading platform.

10. A loading bridge according to one of the preceding claims **characterised in that** the minimal sensor and/or the maximal sensor is
- an optically acting sensor, in particular a light barrier sensor, or
- a mechanically acting sensor, in particular a mechanical feeler sensor, or
- an Inductively or capacitively acting spacing sensor, or
- a force sensor, in particular a force sensor acting on the basis of the strain measurement principle.

11. A loading bridge according to one of the preceding claims **characterised in that** the minimal sensor and/or the maximal sensor does not project beyond the underneath surface of the loading bridge.

12. A loading bridge according to one of the preceding claims **characterised in that** the minimal sensor and/or the maximal sensor is so designed that it can carry the support force occurring at a maximum at the free end (31) of the loading bridge.

13. A loading bridge according to one of the preceding claims **characterised in that** the loading bridge includes a plate member (20) on which the fixed end (21) is provided and a forward extension member (30) which is fixed movably to the plate member and on which the free end (31) is provided and the minimal sensor and/or the maximal sensor is/are fixed to the forward extension member.

14. A loading bridge according to claim 13 **characterised in that** the forward extension member (30) is fixed to the plate member (20) relatively movably in such a way that the length of the loading bridge is variable in the transport direction (110) by that relative movement and there are means (32, 24) for adapting the length of the loading bridge upon detection of the spacing being less than the minimum spacing and/or the spacing being greater than the maximum spacing.

15. A loading bridge according to one of the preceding claims **characterised by** an optical or acoustic signal installation for signalling an operationally unsafe support condition detected by the minimal sensor or the maximal sensor, in particular for signalling that the spacing is less than a minimum spacing as detected by the minimal sensor and/or the spacing exceeds a maximum spacing as detected by the maximal sensor.

16. A loading bridge according to claim 15 **characterised by** an optical signal installation arranged in the region of the surface of the loading bridge, preferably in the region above the sensors, for signalling an operationally safe support condition and/or an operationally unsafe support condition.

17. A loading bridge according to one of the preceding claims **characterised by** means for storage of the data detected by the sensors, in particular the number of times that the spacing is less than or greater than the permissible spacings.

18. A loading bridge according to one of the preceding claims **characterised in that** the minimal sensor and/or the maximal sensor are connected to means for controlling the lowering movement and/or variation in length of the loading bridge for automatically displacing the loading bridge from a rest condition into an operative condition and back.

19. A loading bridge according to one of the preceding claims **characterised in that** the minimal sensor and/or the maximal sensor are arranged at a sensor strut fixed laterally to the loading bridge and the geometry of which preferably follows the profile cross-section of the loading bridge in the fixing region of the strut and the loading bridge.

20. A forward extension member for fixing to the plate member (20) of a loading bridge according to one of the preceding claims **characterised by** a minimal sensor and/or a maximal sensor for detecting the support condition of the loading bridge.

21. A sensor strut (52a, b; 252a, b) for fixing to a loading bridge according to one of the preceding claims **characterised by** at least one minimal sensor (50a, b; 250a, b) and/or at least one maximal sensor (260a, b) for detecting the support condition of the loading bridge.

22. A method of monitoring the support condition of a loading bridge on a load surface of a transport vehicle or a traffic surface of a loading platform,
**characterised in that** the support condition of the loading bridge
a) is detected by means of minimal sensors (50a, b; 250a) arranged in the region of a free end (31) of the loading bridge for detecting the spacing of the front edge (41; 241) of the free end of the loading bridge relative to the edge (141) of the support surface being less than a minimum spacing and/or
b) by means of maximal sensors (260a) arranged in the region of a free end of the loading bridge for detecting the spacing of the front edge of the free end of the loading bridge relative to the edge of the support surface exceeding a maximum spacing.

23. A method according to claim 22 **characterised in that** an optical or acoustic warning signal is triggered in dependence on the signal of the minimal sensor and/or the maximal sensor.

24. A method according to claim 22 or claim 23 **characterised in that** the loading bridge or a portion of the loading bridge is displaced in dependence on the detection of an operationally unsafe support condition by means of the signal of the minimal sensor and/or the maximal sensor in order to achieve an operationally safe support condition.

25. A method according to one of claims 22 to 24 **characterised in that** the data detected by the minimal sensor and/or the maximal sensor are stored in a storage device.

26. A method according to one of claims 22 to 25 **characterised in that** the data detected by the minimal sensor and/or the maximal sensor are passed to a central control location for display there of the support condition of the loading bridge.

## Revendications

1. Passerelle de chargement (10) pour couvrir la distance (150) entre un véhicule de transport et une rampe de chargement (100) afin de transporter les marchandises par le biais de la passerelle de chargement, comprenant
- une extrémité fixée (21) qui peut être fixée de manière mobile sur une rampe de chargement ou un véhicule de transport,
- une extrémité libre (31) qui est réalisée afin de reposer dans la zone d'une surface de chargement d'un véhicule de transport ou une zone de circulation d'une rampe de chargement, et
- une surface de recouvrement (25, 35, 45) qui s'étend dans le sens de transport entre l'extrémité fixée et l'extrémité libre,
**caractérisée en ce qu'**au moins un capteur minimal (50a, b) est présent dans la zone de support de l'extrémité libre (31) afin de détecter l'état de support de la passerelle de chargement.

2. Passerelle de chargement selon la revendication 1,
**caractérisée en ce que** le capteur minimal (50a, b) est réalisé afin de détecter le respect d'une distance minimale entre l'arête avant (41) de la passerelle de chargement et l'arête arrière (143) de la zone de circulation ou de la surface de chargement.

3. Passerelle de chargement selon la revendication 1 ou 2,
**caractérisée en ce que** le capteur minimal (50a, b) est disposé et réalisé à une distance minimale (MIN) prescrite de l'arête avant (41) de l'extrémité libre (31) de la passerelle de chargement afin de détecter la présence d'une surface de support dans la zone au-dessous du capteur minimal.

4. Passerelle de chargement selon l'une quelconque des revendications précédentes,
**caractérisée en ce que** le capteur minimal est réalisé en outre afin de détecter le respect d'une distance maximale entre l'arête avant (41) de l'extrémité libre de la passerelle de chargement et l'arête arrière (143) de la surface de chargement ou de la zone de circulation.

5. Passerelle de chargement selon l'une quelconque des revendications précédentes,
**caractérisée en ce qu'**au moins un capteur maximal (260a, b) est prévu, lequel est disposé de manière contiguë et espacée dans le sens de transport du capteur minimal (250a, b) et est réalisé afin de détecter le respect d'une distance maximale entre l'arête avant de la passerelle de chargement et l'arête arrière de la zone de circulation ou de la surface de chargement.

6. Passerelle de chargement selon la revendication 5,
**caractérisée en ce que** le capteur maximal (260a, b) est disposé et réalisé à une distance maximale (MAX) prescrite de l'arête avant (241) de la passerelle de chargement afin de détecter la présence d'une surface de support dans la zone au-dessous du capteur maximal.

7. Passerelle de chargement selon l'une quelconque des revendications précédentes,
**caractérisée en ce qu'**un premier capteur minimal (50a ; 250a) est prévu, lequel est disposé dans le sens de transport (110) latéralement sur la rampe de chargement et un second capteur minimal (50b ; 250b) est prévu, lequel est disposé dans le sens de transport (110) latéralement à l'opposé du premier capteur minimal sur la passerelle de chargement.

8. Passerelle de chargement selon la revendication 7,
**caractérisée en ce qu'**un premier capteur maximal (260a) est prévu, lequel est disposé dans le sens de transport (110) de manière espacée et contiguë au premier capteur minimal (250a) latéralement sur la rampe de chargement.

9. Passerelle de chargement selon la revendication 8,
**caractérisée en ce qu'**un second capteur maximal (260b) est prévu, lequel est disposé dans le sens de transport (110) latéralement à l'opposé et de manière symétrique au premier capteur maximal (260a) sur la rampe de chargement.

10. Passerelle de chargement selon l'une quelconque des revendications précédentes,
**caractérisée en ce que** le capteur minimal et/ou le capteur maximal est
- un capteur agissant optiquement, notamment un capteur à barrière lumineuse, ou
- un capteur agissant mécaniquement, notamment un palpeur mécanique, ou
- un capteur de distance agissant de manière inductive ou capacitive, ou
- un capteur de force, notamment un capteur de force agissant selon le principe de l'extensomètre.

11. Passerelle de chargement selon l'une quelconque des revendications précédentes,
**caractérisée en ce que** le capteur minimal et/ou le capteur maximal ne dépasse pas de la surface inférieure de la passerelle de chargement.

12. Passerelle de chargement selon l'une quelconque des revendications précédentes,
**caractérisée en ce que** le capteur minimal et/ou le capteur maximal est réalisé de telle sorte à pouvoir recevoir la force d'appui survenant au maximum sur l'extrémité libre (31) de la passerelle de chargement.

13. Passerelle de chargement selon l'une quelconque des revendications précédentes,
**caractérisée en ce que** la passerelle de chargement comprend un plateau (20), sur lequel est réalisée l'extrémité fixée (21), et une avancée (30) fixée de manière mobile sur le plateau, sur laquelle est réalisée l'extrémité libre (31), et le capteur minimal et/ou le capteur maximal est fixé/sont fixés sur l'avancée.

14. Passerelle de chargement selon la revendication 13,
**caractérisée en ce que** l'avancée (30) est fixée de manière relativement mobile sur le plateau (20) de telle façon que la longueur de la passerelle de chargement puisse être modifiée dans le sens de transport (110) par ce mouvement relatif, et **en ce que** des moyens (32, 24) sont présents pour adapter la longueur de la passerelle de chargement lors de la détection d'un passage au-dessous de la distance minimale et/ou d'un passage au-dessus de la distance maximale.

15. Passerelle de chargement selon l'une quelconque des revendications précédentes,
**caractérisée par** une installation de signalisation optique ou acoustique pour la signalisation d'un état de support non fiable détecté par le capteur minimal ou le capteur maximal, notamment d'un passage au-dessous d'une distance minimale détecté par le capteur minimal et/ou d'un passage au-dessus d'une distance maximale détecté par le capteur maximal.

16. Passerelle de chargement selon la revendication 15,
**caractérisée par** une installation de signalisation optique, disposée dans la zone de la surface de la passerelle de chargement, de préférence dans la zone au-dessus des capteurs pour la signalisation d'un état de support fiable et/ou d'un état de support non fiable.

17. Passerelle de chargement selon l'une quelconque des revendications précédentes,
**caractérisée par** des moyens d'enregistrement des données détectées par les capteurs, notamment du nombre de passage au-dessous ou au-dessus des distances admissibles.

18. Passerelle de chargement selon l'une quelconque des revendications précédentes,
**caractérisée en ce que** le capteur minimal et/ou le capteur maximal est relié à des moyens d'enregistrement d'abaissement et/ou de modification de la longueur de la passerelle de chargement pour le déplacement automatique de la passerelle de chargement d'un état de repos à un état de fonctionnement et inversement.

19. Passerelle de chargement selon l'une quelconque des revendications précédentes,
**caractérisée en ce que** le capteur minimal et/ou le capteur maximal est disposé sur une traverse de capteurs fixée latéralement sur la passerelle de chargement, dont la géométrie suit de préférence la section de profilé de la passerelle de chargement dans la zone de fixation de la traverse et de la passerelle de chargement.

20. Avancée pour la fixation sur le plateau (20) d'une passerelle de chargement selon l'une quelconque des revendications précédentes, **caractérisée par** un capteur minimal et/ou un capteur maximal pour la détection de l'état de support de la passerelle de chargement.

21. Traverse de capteurs (52a, b ; 252a, b) pour la fixation sur une passerelle de chargement selon l'une quelconque des revendications précédentes, **caractérisée par** au moins un capteur minimal (50a, b ; 250a, b) et/ou au moins un capteur maximal (260a, b) pour la détection de l'état de support de la passerelle de chargement.

22. Procédé de surveillance de l'état de support d'une passerelle de chargement sur une surface de chargement d'un véhicule de transport ou une zone de circulation d'une rampe de chargement,
**caractérisé en ce que** l'état de support de la passerelle de chargement est détecté
a) au moyen de capteurs minimaux (50a, b ; 250a) disposés dans la zone d'une extrémité libre (31) de la passerelle de chargement pour la détection du passage au-dessous d'une distance minimale entre l'arête avant (41, 241) de l'extrémité libre de la passerelle de chargement et l'arête (141) de la surface de support et/ou
b) au moyen de capteurs maximaux (260a) disposés dans la zone d'une extrémité libre de la passerelle de chargement pour la détection du passage au-dessus d'une distance maximale entre l'arête avant de l'extrémité libre de la passerelle de chargement et l'arête de la surface de support.

23. Procédé selon la revendication 22,
**caractérisé en ce qu'**un signal d'avertissement optique ou acoustique est déclenché en fonction du signal du capteur minimal et/ou du capteur maximal.

24. Procédé selon la revendication 22 ou 23,
**caractérisé en ce que** la passerelle de chargement ou une section de la passerelle de chargement est déplacée en fonction de la détection d'un état de support non fiable au moyen du signal du capteur minimal et/ou du capteur maximal de passerelle de chargement afin d'atteindre un état de support fiable.

25. Procédé selon l'une quelconque des revendications 22 à 24,
**caractérisé en ce que** les données détectées par le capteur minimal et/ou le capteur maximal sont enregistrées dans un dispositif de mémorisation.

26. Procédé selon l'une quelconque des revendications 22 à 25,
**caractérisé en ce que** les données détectées par le capteur minimal et/ou le capteur maximal sont transmises à un poste de commande central pour y indiquer l'état de support de la passerelle de chargement.
